# EUROPEAN PATENT APPLICATION

(11) **EP 4 537 922 A2**
(43) Date of publication of application: **16.04.2025**
(21) Application number: 25161319.6
(22) Date of filing: 15.12.2022
(51) Int. Cl.: B01D 39/16

(54) **NONWOVEN FABRICS INCLUDING RECYCLED POLYESTER**

(30) Priority: 16.12.2021 US 202163290366 P
(62) Divisional of application: 22854533.1
(71) Applicant: Berry Global, Inc., Evansville, Indiana 47710 (US)
(72) Inventor: ANDAN, Saravanan, Mount Juliet, 37122 (US); SINANGIL, Mehmet Selcuk, Mooresville, 28117 (US)
(74) Representative: Meissner Bolte Nürnberg

(57) **Abstract**

Nonwoven fabrics are provided that comprise (i) a plurality of continuous matrix fibers comprising a first polymeric material having a first melting point and including a first polymer component, in which the first polymer component comprises a first recycled-polyester, and (ii) a plurality of binder fibers having an irregular cross-section randomly dispersed throughout the plurality of matrix fibers, in which the plurality of binder fibers comprise a second polymeric material having a second melting point including a second polymer component, wherein the second polymer component comprises a second recycled-polyester, a recycled polypropylene or a recycled polyethylene. The second melting point is less than the first melting point.

## Description

### TECHNICAL FIELD

Embodiments of the presently-disclosed invention relate generally to nonwoven fabrics including a plurality of continuous matrix fibers comprising a first recycled-polyester, and a plurality of binder fibers having an irregular cross-section randomly dispersed throughout the plurality of matrix fibers. In this regard, the nonwoven fabric may be provided in the form or as a component, for example, of a dryer sheet or filter media for air or liquid filtration applications.

Nonwoven fabrics are provided that include (i) a plurality of continuous matrix fibers comprising a first polymeric material having a first melting point and including a first polymer component, in which the first polymer component comprises a first recycled-polyester, and (ii) a plurality of binder fibers having an irregular cross-section randomly dispersed throughout the plurality of matrix fibers, in which the plurality of binder fibers comprising a second polymeric material having a second melting point including a second polymer component. The second melting point being less than the first melting point.

### BACKGROUND

There has been increased interest in using recycled plastics in a variety of disposable products. Plastic recycling generally includes recovering scrap or waste plastic and reprocessing the material into useful products. Since the majority of plastic is non-biodegradable, recycling is part of global effort to reduce plastic waste that will either be burned, placed in a landfill, or find its way into one of the world's oceans. In some instances, the use of recycled plastics may be undesirably associated with products that exhibit reduced physical properties in comparison to products formed entirely from virgin plastics.

Therefore, there remains a need in the art for a nonwoven fabric, which may be suitable for a variety of applications, that includes an substantial quantity of fibers formed from recycled plastics.

### SUMMARY OF INVENTION

The invention is defined by the annexed claims. Embodiments result from the dependent claims and the description below.

One or more embodiments of the invention may address one or more of the aforementioned problems. Certain embodiments according to the invention provide a nonwoven fabric including a plurality of continuous matrix fibers having a first melting point and comprising a first polymeric material including a first polymer component, in which the first polymer component comprises a first recycled-polyester, such as a first recycled-polyester terephthalate (rPET). The nonwoven fabric may also include a plurality of binder fibers having an irregular cross-section randomly dispersed throughout the plurality of matrix fibers, in which the plurality of binder fibers comprise a second polymeric material including a second polymer component. The second polymeric material has a second melting point that is less than the first melting point.

In another aspect, the invention provides a method of making a nonwoven fabric including the following steps: (a) forming a first polymeric melt having a first melting point and comprising a first polymeric material including a first polymer component, in which the first polymer component comprises a first recycled-polyester, such as a first recycled-polyester terephthalate (rPET); (b) producing a second polymeric melt comprising a second polymeric material including a second polymer component, in which the second polymeric material has a second melting point that is less than the first melting point; (c) melt spinning the first polymeric melt through a first plurality of orifices of a spinneret and forming a plurality of continuous matrix fibers comprising the first polymeric material, and melt spinning the second polymeric melt through a second plurality of orifices of the spinneret and forming a plurality of binder fibers comprising the second polymeric material; (d) depositing the plurality of continuous matrix fibers and the plurality of binder fibers onto a moving belt, in which the plurality of binder fibers are randomly dispersed within the plurality of continuous matrix fibers to provide a nonwoven web; and (e) consolidating the nonwoven web to form the nonwoven fabric, such as those described and disclosed herein.

In another aspect, the present invention provides a dryer sheet including a nonwoven substrate comprising a nonwoven fabric as disclosed and described herein, a fabric conditioning agent disposed on the nonwoven substrate.

In yet another aspect, the present invention provides a filter including a filter media comprising a nonwoven fabric as described and disclosed herein, in which the nonwoven fabric is housed within a frame.

### BRIEF DESCRIPTION OF THE DRAWING(S)

The invention now will be described more fully hereinafter with reference to the accompanying drawings, in which some, but not all embodiments of the invention are shown. Indeed, this invention may be embodied in many different forms and should not be construed as limited to the embodiments set forth herein; rather, these embodiments are provided so that this disclosure will satisfy applicable legal requirements. Like numbers refer to like elements throughout, and wherein:
Figure 1A illustrates a nonwoven fabric in accordance with certain embodiments of the invention;
Figure 1B illustrates an image of a trilobal matric fiber in accordance with certain embodiments of the invention;
Figure 2 is a graph of data comparing a percent coating released from two working examples;
Figure 3 is a graph of data comparing a percent coating retained from the two working examples from Figure 2;
Figure 4 is a graph of data comparing an average percent coating released from the two working examples from Figure 2 with a comparative example.

### DETAILED DESCRIPTION

The invention now will be described more fully hereinafter with reference to the accompanying drawings, in which some, but not all embodiments of the invention are shown. Indeed, this invention may be embodied in many different forms and should not be construed as limited to the embodiments set forth herein; rather, these embodiments are provided so that this disclosure will satisfy applicable legal requirements. As used in the specification, and in the appended claims, the singular forms "a", "an", "the", include plural referents unless the context clearly dictates otherwise.

The terms "substantial" or "substantially" may encompass the whole amount as specified, according to certain embodiments of the invention, or largely but not the whole amount specified (e.g., 95%, 96%, 97%, 98%, or 99% of the whole amount specified) according to other embodiments of the invention.

The terms "polymer" or "polymeric", as used interchangeably herein, may comprise homopolymers, copolymers, such as, for example, block, graft, random, and alternating copolymers, terpolymers, etc., and blends and modifications thereof. Furthermore, unless otherwise specifically limited, the term "polymer" or "polymeric" shall include all possible structural isomers; stereoisomers including, without limitation, geometric isomers, optical isomers or enantionmers; and/or any chiral molecular configuration of such polymer or polymeric material. These configurations include, but are not limited to, isotactic, syndiotactic, and atactic configurations of such polymer or polymeric material. The term "polymer" or "polymeric" shall also include polymers made from various catalyst systems including, without limitation, the Ziegler-Natta catalyst system and the metallocene/single-site catalyst system. The term "polymer" or "polymeric" shall also include, in according to certain embodiments of the invention, polymers produced by fermentation process or biosourced.

The term "pre-consumer waste", as used herein, may comprise plastic (e.g., polyester) that has been recovered from the consumer supply chain, for example, from beverage bottles, which have expired or never consumed. The plastic (e.g., polyester) may be recycled and then ground and processed as a polyester staple fiber feedstock (e.g., recycled polyester fibers).

The term "post-consumer waste", as used herein, may comprise plastic (e.g., a polyester) that has been recovered from the consumer supply chain, for example, from beverage bottles, which are recycled and then ground and processed as a polyester staple fiber feedstock (e.g., recycled polyester fibers). For example, the plastic (e.g., a polyester) may comprise a polymeric material that originated from post-consumer sources (e.g., products) such as domestic, distribution, retail, industrial, and demolition that have been discarded for disposal or recovery after having completed their intended uses as a consumer product, including, for example, plastic containers (e.g., bottles) and plastic bags.

The term "post-industrial waste", as used herein, may comprise plastic (e.g., polyester) that is generated during a manufacturing process of upstream polyester and plastic products. Non-limiting examples of such manufacturing processes can be from virgin fiber producers, tire cord manufacturers, polymerization plants, and other plastic products.

The term "recycled polyester fibers", as used herein, may comprise man-made fibers produced from polyester pre-consumer waste, polyester post-consumer waste and/or polyester post-industrial waste. In this regard, instead of utilizing new resin (e.g., virgin resin) to form the fibers (e.g., petroleum), recycled polyester fibers are produced from existing plastic (e.g., discarded water bottles). The use of recycled polyester lowers its environmental impact versus virgin polyester. Recycled polyester, for instance, reduces reliance on virgin petroleum as a raw material and diverts used plastic from landfills.

The terms "nonwoven" and "nonwoven web", as used herein, may comprise a web having a structure of individual fibers, filaments, and/or threads that are interlaid but not in an identifiable repeating manner as in a knitted or woven fabric. Nonwoven fabrics or webs, according to certain embodiments of the invention, may be formed by any process conventionally known in the art such as, for example, meltblowing processes, spunbonding processes, needle-punching, hydroentangling, air-laid, and bonded carded web processes. A "nonwoven web", as used herein, may comprise a plurality of individual fibers that have not been subjected to a consolidating process.

The terms "fabric" and "nonwoven fabric", as used herein, may comprise a web of fibers in which a plurality of the fibers are mechanically entangled or interconnected, fused together, and/or chemically bonded together. For example, a nonwoven web of individually laid fibers may be subjected to a bonding or consolidation process to bond at least a portion of the individually fibers together to form a coherent (e.g., united) web of interconnected fibers.

The term "consolidated" and "consolidation", as used herein, may comprise the bringing together of at least a portion of the fibers of a nonwoven web into closer proximity or attachment there-between (e.g., thermally fused together, chemically bonded together, through-air-bonded, and/or mechanically entangled together) to form a bonding site, or bonding sites, which function to increase the resistance to external forces (e.g., abrasion and tensile forces), as compared to the unconsolidated web. The bonding site or bonding sites, for example, may comprise a discrete or localized region of the web material that has been softened or melted and optionally subsequently or simultaneously compressed to form a discrete or localized deformation in the web material. Furthermore, the term "consolidated" may comprise an entire nonwoven web that has been processed such that at least a portion of the fibers are brought into closer proximity or attachment there-between (e.g., thermally fused together, chemically bonded together, through-air-bonded, and/or mechanically entangled together), such as by thermal bonding, through-air-bonding, or mechanical entanglement (e.g., hydroentanglement) as merely a few examples. Such a web may be considered a "consolidated nonwoven", "nonwoven fabric" or simply as a "fabric" according to certain embodiments of the invention.

The term "through-air bonded", as used herein, may comprise a nonwoven web consolidated by a bonding process (e.g., "through-air-bonding") in which hot air is used to fuse the fibers at the surface of the web and optionally internally within the web. By way of example only, hot air can either be blown through the web in a conveyorized oven or sucked through the web as it passes over a porous drum as a vacuum is developed. The temperature of the hot air and the rate of hot air are parameters that may determine the level or the extent of bonding in nonwoven web. In accordance with certain embodiments of the invention, the temperature of the hot air may be high enough to (i) melt and/or fuse binder fibers distributed throughout matrix fibers, while not melting the matrix fibers and/or (ii) melt and/or fuse a first polymeric component (e.g., a sheath component) of a multicomponent fiber (e.g., bicomponent fiber) while not melting a second polymeric component (e.g., a sheath component) of the multicomponent fiber.

The terms "area bonded" and "area bonding", as used herein, may refer to a thermal consolidation process in which a nonwoven web consolidated by a smooth thermal calender that has been heated and applies pressure across at least one outermost surface of the nonwoven web causing fusion between a larger proportion of the fibers forming the nonwoven web as compared to thermal point bonding. For example, two or more smooth rollers may be designed to heat the entire surface of at least one of the outermost surfaces of the nonwoven web. In embodiments including binder fibers (e.g., having a relatively low melting point) dispersed throughout matrix fibers (e.g., having a melting point higher than the binder fibers), the binder fibers produce bonding sites at all or a majority of the crossover points between the binder fibers and the matrix fibers.

The term "spunbond", as used herein, may comprise fibers which are formed by extruding molten thermoplastic material as filaments from a plurality of fine, usually circular, capillaries of a spinneret with the diameter of the extruded filaments then being rapidly reduced. According to an embodiment of the invention, spunbond fibers are generally not tacky when they are deposited onto a collecting surface and may be generally continuous as disclosed and described herein. It is noted that the spunbond used in certain composites of the invention may include a nonwoven described in the literature as SPINLACE^{®}. Spunbond fibers, for example, may comprises continuous fibers.

As used herein, the term "continuous fibers" refers to fibers which are not cut from their original length prior to being formed into a nonwoven web or nonwoven fabric. Continuous fibers may have average lengths ranging from greater than about 15 centimeters to more than one meter, and up to the length of the web or fabric being formed. For example, a continuous fiber, as used herein, may comprise a fiber in which the length of the fiber is at least 1,000 times larger than the average diameter of the fiber, such as the length of the fiber being at least about 5,000, 10,000, 50,000, or 100,000 times larger than the average diameter of the fiber.

The term "meltblown", as used herein, may comprise fibers formed by extruding a molten thermoplastic material through a plurality of fine die capillaries as molten threads or filaments into converging high velocity, usually hot, gas (e.g. air) streams which attenuate the filaments of molten thermoplastic material to reduce their diameter, which may be to microfiber diameter, according to certain embodiments of the invention. According to an embodiment of the invention, the die capillaries may be circular. Thereafter, the meltblown fibers are carried by the high velocity gas stream and are deposited on a collecting surface to form a web of randomly disbursed meltblown fibers. Meltblown fibers may comprise microfibers which may be continuous or discontinuous and are generally tacky when deposited onto a collecting surface. Meltblown fibers, however, are shorter in length than those of spunbond fibers.

The term "staple fiber", as used herein, may comprise a cut fiber from a filament. In accordance with certain embodiments, any type of filament material may be used to form staple fibers. For example, staple fibers may be formed from polymeric fibers, and/or elastomeric fibers. Non-limiting examples of materials may comprise polyolefins (e.g., a polypropylene or polypropylene-containing copolymer), polyethylene terephthalate, and polyamides. The average length of staple fibers may comprise, by way of example only, from about 2 centimeter to about 15 centimeter.

The term "multi-component fibers", as used herein, may comprise fibers formed from two or more different polymeric materials or compositions extruded from separate extruders but spun together to form one fiber. The polymeric materials or polymers are arranged in a substantially constant position in distinct zones across the cross-section of the multi-component fibers and extend continuously along the length of the multi-component fibers. The term "bicomponent fibers", as used herein, may comprise fibers formed from two different polymeric materials or compositions extruded from separate extruders but spun together to form one fiber. The polymeric materials or polymers are arranged in a substantially constant position in distinct zones across the cross-section of the multi-component fibers and extend continuously along the length of the multi-component fibers. The configuration of such a multi-component fibers may be, for example, a sheath/core arrangement wherein one polymer is surrounded by another, an eccentric sheath/core arrangement, a side-by-side arrangement, a pie arrangement, or an "islands-in-the-sea" arrangement, each as is known in the art of multicomponent, including bicomponent, fibers.

As used herein, the term "aspect ratio", comprise a ratio of the length of the major axis to the length of the minor axis of the cross-section of the fiber in question.

The term "layer", as used herein, may comprise a generally recognizable combination of similar material types and/or functions existing in the X-Y plane.

All whole number end points disclosed herein that can create a smaller range within a given range disclosed herein are within the scope of certain embodiments of the invention. By way of example, a disclosure of from about 10 to about 15 includes the disclosure of intermediate ranges, for example, of: from about 10 to about 11; from about 10 to about 12; from about 13 to about 15; from about 14 to about 15; etc. Moreover, all single decimal (e.g., numbers reported to the nearest tenth) end points that can create a smaller range within a given range disclosed herein are within the scope of certain embodiments of the invention. By way of example, a disclosure of from about 1.5 to about 2.0 includes the disclosure of intermediate ranges, for example, of: from about 1.5 to about 1.6; from about 1.5 to about 1.7; from about 1.7 to about 1.8; etc.

In one aspect, the present invention provides a nonwoven fabric including a plurality of continuous matrix fibers having a first melting point and comprising a first polymeric material including a first polymer component, in which the first polymer component comprises a first recycled-polyester, such as a first recycled-polyester terephthalate (rPET). The nonwoven fabric may also include a plurality of binder fibers having an irregular cross-section randomly dispersed throughout the plurality of matrix fibers, in which the plurality of binder fibers comprise a second polymeric material including a second polymer component. The second polymeric material has a second melting point that is less than the first melting point. For example, the second polymer component may have a melting point that is lower than that of the first polymer component. In accordance with certain embodiments of the invention, the nonwoven fabric includes a first ratio between the plurality of continuous matrix fibers and the plurality of binder fibers, based on weight, (weight of plurality of continuous matrix fibers : weight of plurality of binder fibers) that may comprise from about 80:10 to about 95:5, such as at least about any of the following: 80:20, 82:18, 84:16: 85:15, 86:14, 88:12, 89:11, and 90:10, 91:9, 92:8, 93:7, 94:6, and 95:5. In accordance with certain embodiments of the invention, the plurality of continuous matrix fibers comprise monocomponent fibers (e.g., the entirety of each fibers being formed from the same polymeric material).

The first polymeric material, in accordance with certain embodiments of the invention, may comprise a total polymer content comprising from about 40 to about 100% by weight of the first polymeric component, such as at least about any of the following: 40, 42, 45, 48, 50, 52, 55, 58, 60, 62, 65, 68, and 70% by weight of the first polymeric component, and/or at most about any of the following: 100, 98, 95, 92, 90, 88, 85, 82, 80, 78, 75, 72, and 70% by weight of the first polymeric component.

**In** accordance with certain embodiments of the invention, the first polymeric material may include one or more additional polymer components. For example, the one or more additional polymer components may comprise a third polymer component, such as an additional rPET (e.g., a third rPET) or a virgin polyester, such as a virgin PET. The first polymeric material, for instance, may comprise a blend of two polyesters (e.g., the first polymer component and the third polymer component), such as a first rPET and a virgin PET. The first polymeric material, for example, may comprise from about 0 to about 60% by weight of the third polymeric component, such as at least about any of the following: 0, 2, 5, 8, 10, 12, 15, 18, 20, 22, 25, 28, and 30% by weight of the third polymeric component, and/or at most about any of the following: 60, 58, 55, 52, 50, 48, 45, 42, 40, 38, 35, 32, 30, 28, 25, 22, and 20% by weight of the third polymeric component.

In accordance with certain embodiments of the invention, the plurality of continuous matrix fibers may have a round cross-section having an aspect ratio from about 0.8 to about 1.2, such as at least about any of the following: 0.8, 0.9, and 1, and/or at most about any of the following: 1.2, 1.1, and 1. Additionally or alternatively, the plurality of continuous matrix fibers may have a non-round cross-section having an aspect ratio of at least about 1.5, such as at least about any of the following: 1.5, 1.8, 2, 2.2, 2.5, 2.8, and 3, and/or at most about any of the following: 10, 9, 8, 7, 6, 5, 4, and 3. The continuous matrix fibers having a non-round cross-section may comprise ribbon-shaped fibers, multi-lobal fibers, or a mixture thereof.

The plurality of continuous matrix fibers, in accordance with certain embodiments of the invention, may have an average cross-section from about 12 to about 36 microns, such as at least about any of the following: 12, 15, 18, 20, 22, 24, and 25 microns, and/or at most about of the following: 36, 35, 32, 30, 28, 25 microns. The measurement of the average cross-section for non-round fibers are measured across the widest section of the fibers being measured. Additionally or alternatively, the plurality of continuous matrix fibers may have an average denier per fiber (dpf) from about 3 to about 12 dpf, such as at least about any of the following: 3, 4,5, and 6 dpf, and/or at most about any of the following: 12, 10, 9, 8, 7, and 6 dpf.

In accordance with certain embodiments of the invention, the first recycled-polyester may comprise post-consumer waste, pre-consumer waste, and/or post-consumer waste. In this regard, at least a portion of the plurality of continuous matrix fibers may comprise recycled polyester fibers formed completely or in part, such as discussed above, from post-consumer waste, pre-consumer waste, and/or post-consumer waste.

In accordance with certain embodiments of the invention, the plurality of binder fibers may comprise monocomponent staple fibers, monocomponent continuous fibers, or a combination thereof. As noted above, the plurality of binder fibers may comprise a second polymeric material including a second polymer component. The second polymer component, for example, may comprise a homopolymer or a copolymer, such as a PET-containing copolymer. In accordance with certain embodiments of the invention, the second polymeric material and/or second polymer component has a melting point that is lower than the melting point of the first polymeric material and/or first polymer component. The second polymer component, for example, may comprise a second virgin polyester, such as a virgin PET, a virgin polypropylene or copolymer thereof, a virgin polyethylene or a copolymer thereof, a second recycled-polyester, such as a second recycled-polyester terephthalate (rPET), a recycled polypropylene, or a recycled polyethylene.

In accordance with certain embodiments of the invention, the plurality of binder fibers may comprise multi-component staple fibers, such as bicomponent staple fibers, or multi-component continuous fibers, such as bicomponent continuous fibers, or a combination thereof.

The second polymeric material, in accordance with certain embodiments of the invention, may define at least a portion of an outermost surface of (i) the multi-component staple fibers, such as bicomponent staple fibers, (ii) multi-component continuous fibers, such as bicomponent continuous fibers, and/or (iii) a combination thereof. By way of one example, the second polymeric material may define a sheath component of the bicomponent staple fibers, the bicomponent continuous fibers, or combination thereof. Additionally or alternatively the bicomponent staple fibers, the bicomponent continuous fibers, or combination thereof may comprise multi-lobal fibers, in which the second polymeric material defines at least a portion of the lobes of the multi-lobal fibers. For example, the second polymeric material is located at and define the tips of the multi-lobal fibers.

In accordance with certain embodiments of the invention, the second melting point may be from about 5 to about 50°C less than the first melting point, such as at least about any of the following: 5, 6, 8, 10, 12, 14, 15, 16, 18, and 20°C less than the first melting point, and/or at most about any of the following: 50, 45, 40, 35, 30, 28, 25, 22, and 20°C less than the first melting point. Additionally or alternatively, the nonwoven fabric may have a third ratio between a first melt flow rate (MFR) of the first polymer component and a second melt flow rate of the second polymer component from about 1:50 to about 1:1.2, such as at least about any of the following: 1:50, 1:40, 1:30, 1:20, 1:10, 1:5, and 1:2, and/or at most about 1:1.2, 1:1.4, 1:1.5, 1:1.6; 1:1.8, 1:2, 1:2.5, 1:3, 1:3.5, 1:4, 1:4.5, and 1:1.5.

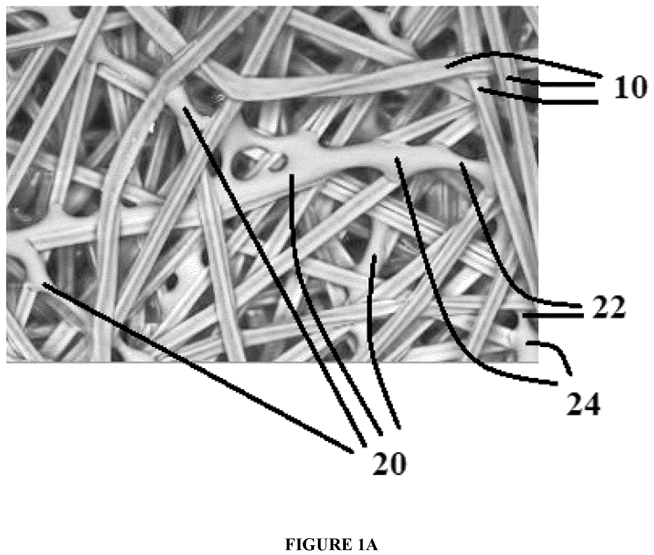

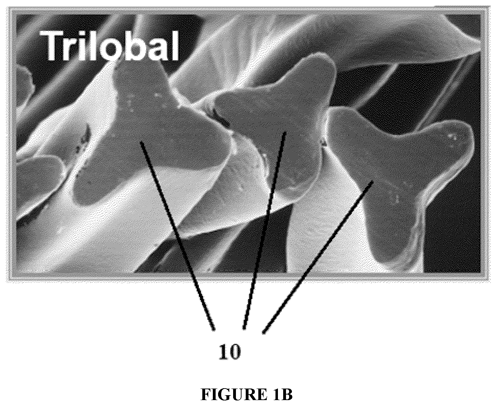

The plurality of binder fibers, for instance, may have been selectively at least partially melted and at least partially flowed to form the irregular cross-sections found in the plurality of binder fibers, while not melting the plurality of continuous matrix fibers. Figure 1A, for instance, a magnified image of a nonwoven fabric including a plurality of continuous matrix fibers 10 and a plurality of binder fibers 20. As shown in Figure 1A, the plurality of binder fibers 20 each have an irregular cross-section along the length to the fibers where the second polymer has partially melted and flowed or spread-out to interact or contact multiple matrix fibers prior to being re-solidified and forming a network of bonds with the matrix fibers. For instance, the plurality of binder fibers 20 include narrow portions 22 that may appear to have a more defined geometry (e.g., a defined geometry such as a circle) and larger or deformed portions 24 wherein the second polymer has melted, flowed, and re-solidified. Figure 1B illustrates a plurality of continuous matrix fibers 10 having a trilobal cross-section.

The nonwoven fabric, in accordance with certain embodiments of the invention, may comprise a through-air-bonded (TAB) nonwoven fabric, a thermally area bonded nonwoven fabric, or a thermally point bonded nonwoven fabric.

In accordance with certain embodiments of the invention, the nonwoven may have a fourth ratio between a cross-direction tensile strength to a machine direction tensile strength from about 0.7:1 to about 1.3:1, such as at least about any of the following: 0.7:1, 0.8:1, 0.9:1, 0.95: 1, 0.98:1, and 1:1, and/or at most about any of the following: 1.3:1, 1.2:1, 1.1:1, 1.05:1, 1.02:1, and 1:1. The cross-direction tensile strength and the machine direction tensile strengths are determined according to ASTM D44632-96.

The nonwoven fabric, in accordance with certain embodiments of the invention, may have a basis weight from about 5 to about 100 grams-per-square meter (gsm), such as at least about any of the following: 5, 6, 8, 10, 12, 15, 18, 20, 22, 25, 28, 30, 32, 35, 38, 40, 42, 45, 48, and 50 gsm, and/or at most about any of the following: 100, 95, 90, 85, 80, 75, 70, 65, 60, 55, and 50 gsm.

In another aspect, the invention provides a method of making a nonwoven fabric including the following steps: (a) forming a first polymeric melt having a first melting point and comprising a first polymeric material including a first polymer component, in which the first polymer component comprises a first recycled-polyester, such as a first recycled-polyester terephthalate (rPET); (b) producing a second polymeric melt comprising a second polymeric material including a second polymer component, in which the second polymeric material has a second melting point that is less than the first melting point; (c) melt spinning the first polymeric melt through a first plurality of orifices of a spinneret and forming a plurality of continuous matrix fibers comprising the first polymeric material, and melt spinning the second polymeric melt through a second plurality of orifices of the spinneret and forming a plurality of binder fibers comprising the second polymeric material; (d) depositing the plurality of continuous matrix fibers and the plurality of binder fibers onto a moving belt, in which the plurality of binder fibers are randomly dispersed within the plurality of continuous matrix fibers to provide a nonwoven web; and (e) consolidating the nonwoven web to form the nonwoven fabric, such as those described and disclosed herein.

In accordance with certain embodiments of the invention, the step of consolidating the nonwoven web may comprise subjecting the nonwoven web to a temperature that is greater than the second melting point and less than the first melting point. In this regard, the consolidation step may selectively at least partially melt and induce at least partially flowing of the plurality of binder fibers, while not melting the plurality of continuous matrix fibers. In accordance with certain embodiments of the invention, the step of consolidating the nonwoven web may comprise subjecting the nonwoven web to a through-air-bonding (TAB) operation. Additionally or alternatively, the step of consolidating the nonwoven web may comprise subjecting the nonwoven web to a thermal area bonding operation. Additionally or alternatively, the step of consolidating the nonwoven web comprises subjecting the nonwoven web to a thermal point bonding operation. As noted above, the step of consolidating the nonwoven web may comprise softening or melting the second polymer component and allowing or inducing at least a partial flowing of the second polymer component such that the plurality of binder fibers have an irregular cross-section.

In accordance with certain embodiments of the invention, the first polymeric material may have a first intrinsic viscosity (IV) from 0.6 to about 1 η as determined by ASTM D5225, such as at least about any of the following: 0.6, 0.62, 0.64, 0.65, 0.68, and 0.7 η, and/or at most about any of the following: 1, 0.95, 0.9, 0.85, 0.8, 0.78, 0.76, 0.75, 0.74, 0.72, and 0.7 η. Additionally or alternatively, second polymeric material may have a second IV from 0.5 to about 0.8 η as determined by ASTM D5225, such as at least about any of the following: 0.5, 0.52, 0.55, 0.58, and 0.6 η, and/or at most about any of the following: 0.8, 0.78, 0.76, 0.75, 0.74, 0.72, 0.7, 0.68, 0.65, 0.62, and 0.6 η. In accordance with certain embodiments of the invention, the first IV may be greater than the second IV.

In accordance with certain embodiments of the invention, the method may further comprise a step of annealing (e.g., thermal annealing) the nonwoven web prior to the step of consolidating the nonwoven web. For example, the step of annealing the nonwoven web may comprise raising the temperature of the nonwoven web to within about 7°C below the second melting point, such as within about 6°C, 5°C, 4°C, or 3°C below the second melting point or the first melting point. In accordance with certain embodiments of the invention, the nonwoven web may be under physical constraint (e.g., between two belts, or belt and drum, or stenter type constraint) as the temperature of the nonwoven web is raised. In accordance with certain embodiments of the invention, prior to releasing the nonwoven web from the constraint, the temperature of the nonwoven web may be reduced (e.g., passively or actively) to about 30° C (e.g., from about 20°C to about 35°C) to complete the annealing step. For example, the step of allowing or actively reducing the temperature of the nonwoven web to a reduced temperature prior to releasing the nonwoven web from the physical constraint may comprise reducing the temperature of the nonwoven web to about 20 to about 35°C, such as at least about any of the following: 20, 22, 25, and 28°C, and/or at most about any of the following: 35, 32, 30, and 28°C. In accordance with certain embodiments of the invention, the step of annealing the nonwoven web may only increase the tackiness of the second polymer material.

In accordance with certain embodiments of the invention, the nonwoven web may be subjected to the annealing operation under conditions sufficient to merely increase the tackiness of the plurality of binder fibers to promote adhesion with the plurality of continuous matric fibers as the nonwoven web enters, for example, the TAB operation to reduce shrinkage that may ordinarily be associated with TAB operations.

In another aspect, the present invention provides a dryer sheet including a nonwoven substrate comprising a nonwoven fabric as disclosed and described herein, a fabric conditioning agent disposed on the nonwoven substrate. In accordance with certain embodiments of the invention, at least a portion of the fabric conditioning agent transfers from the nonwoven substrate to an article of laundry once drying temperature within a tumble-type dryer is greater than about 120°F.

The fabric conditioning agent, for example, may comprises a quaternary ammonium compound. In accordance with certain embodiments of the invention, the fabric conditioning agent may comprise at least one of alkylated quaternary ammonium compounds, ring or cyclic quaternary ammonium compounds, aromatic quaternary ammonium compounds, diquaternary ammonium compounds, alkylated quaternary ammonium compounds, amidoamine quaternary ammonium compounds, ester quaternary ammonium compounds, and mixtures thereof. Additionally or alternatively, the fabric conditioning agent may comprise a tallow based quaternary ammonium compound or a vegetable based quaternary ammonium compound.

In yet another aspect, the present invention provides a filter including a filter media comprising a nonwoven fabric as described and disclosed herein, in which the nonwoven fabric is housed within a frame. In accordance with certain embodiments of the invention, the filter media may comprises a plurality of pleats formed therein.

In accordance with certain embodiments of the invention, the filter media may comprise at least one filtration layer comprising one or more meltblown layers, one or more melt-fibrillated layers, one or more sub-micron containing nonwoven layers, or any combination thereof. For example, the at least one filtration layer may be supported on the nonwoven fabric. In accordance with certain embodiments of the invention, the filter media may comprise a first nonwoven fabric such as those described and disclosed herein, a second nonwoven fabric such as those described and disclosed herein, and the at least one filtration layer, in which the at least one filtration layer is located between the first nonwoven fabric and the second nonwoven fabric. In this regard, the fibers of the at least one filtration layer may lack structural integrity alone but are provided structural integrity and protection by virtue of the first and/or second nonwoven fabric.

In accordance with certain embodiments of the invention, the filter media may comprise at least one filtration layer comprising a polymeric membrane supported on the nonwoven fabric. The polymeric membrane, for example, may comprise an ultrafiltration membrane, a nanofiltration membrane, or a reverse osmosis membrane.

In accordance with certain embodiments of the invention, the filter comprises an air filter or a facemask. Alternatively, the filter may comprise a liquid filter, such as the filtration of water (e.g., pools, spas, residential water filtration, and industrial water filtration), or filtration of organic liquids.

### Examples

The present disclosure is further illustrated by the following examples, which in no way should be construed as being limiting. That is, the specific features described in the following examples are merely illustrative and not limiting.

An initial set of tests were performed on two rolls of nonwoven fabric produced in accordance with certain embodiments of the invention. For each roll, the fiber content of the nonwoven fabric consisted of 89% by weight of matrix fibers formed from a blend of a 50% by weight of a rPET and 50% by weight of a first virgin PET, and 11% by weight of binder fibers formed from a second virgin PET having a lower melting point than the rPET and the first virgin PET. In this regard, nonwoven fabric of each of the rolls included 44.5% by weight of the rPET based on the total weight of the fibers.

Four 9" x 6.4" sheets were cut from each roll to provide eight total samples (i.e., four from each roll). Each sample was initially weighed, and a release coating targeting 1.4g was coated onto each sample. The coated samples were each weighed after coating to identify the exact weight of the release coating on each sample.

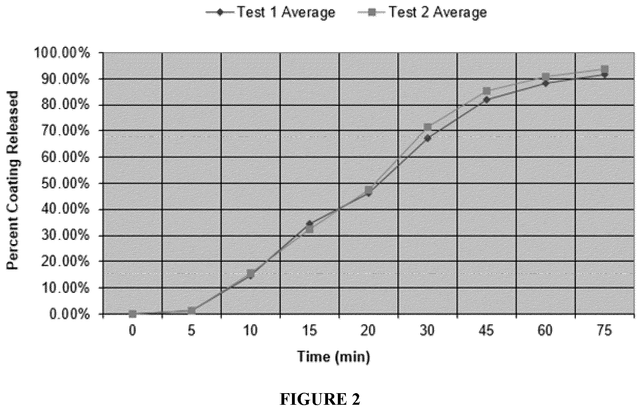

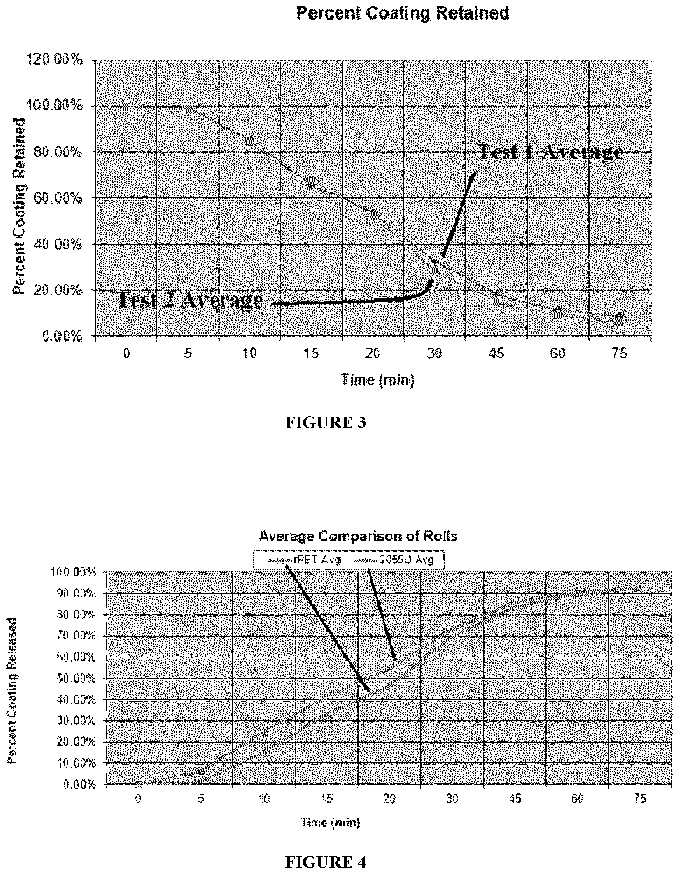

Each of the samples were ran through a series of washing and drying cycles using an Amana Super Capacity Plus (3.3 cubic foot) washer and an Amana Super Capacity Plus (7.1 cubic foot) dryer. In particular, the dryer timed cycles constituted: (i) 5 minute intervals until a total drying time of 20 minutes was reached; the (ii) a single 10 minute interval until a total drying time of 30 minutes was reached; and (iii) 15 minute intervals for the remaining drying time until a total drying time of 75 was reached. Table 1 shows the average weight percentage of coating released and the average weight percentage of coating remaining on the sample for the first four samples associated with the first roll, while Table 2 shows the data gained for the samples associated with the second roll. Figures 2 and 3 illustrate the graphical representation of the data shown in Tables 1 and 2. In particular, Figure 2 shows the weight percentage of coating released from the sample as a function of drying time and Figure 3 shows the weight percentage of the coating retained on the sample as a function of drying time.

**Table 1**

| **ELAPSED TIME IN MINUTES** | **% COATING RELEASED** | **% COATING REMAINING** |
|---|---|---|
| **5** | **1.26%** | **98.74%** |
| **10** | **14.66%** | **85.34%** |
| **15** | **34.37%** | **65.63%** |
| **20** | **46.19%** | **53.81%** |
| **30** | **67.04%** | **32.96%** |
| **45** | **81.95%** | **18.05%** |
| **60** | **88.31%** | **11.69%** |
| **75** | **91.55%** | **8.45%** |

**Table 2**

| **ELAPSED TIME IN MINUTES** | **% COATING RELEASED** | **% COATING REMAINING** |
|---|---|---|
| **5** | **1.27%** | **98.73%** |
| **10** | **15.55%** | **84.45%** |
| **15** | **32.40%** | **67.60%** |
| **20** | **47.52%** | **52.48%** |
| **30** | **71.62%** | **28.38%** |
| **45** | **85.36%** | **14.64%** |
| **60** | **90.86%** | **9.14%** |
| **75** | **93.59%** | **6.41%** |

Next, a comparative dryer sheet, which is identified as 2055U in the tables and figures) was subjected to the same method of testing outlined below. The comparative dryer sheet was formed from the same percentage of matrix fiber (i.e., 89% by weight) and binger fibers (i.e., 11% by weight), in which the matrix fibers consisted of 25% by weight of rPET with the remainder being virgin PET and the binder fibers for formed completely from a PET homopolymer. The data pertaining to the weight percent of the coating released for the comparative dryer sheet is provided in Table 3 along with the average data for each eight samples discussed above. Figure 4 shows a graphical comparison of the data listed in Table 3.

**Table 3**

| **2055U Avg** | **rPET Avg** | **Time (min)** |
|---|---|---|
| **0.00%** | **0.00%** | **0** |
| **6.45%** | **1.26%** | **5** |
| **24.94%** | **15.11%** | **10** |
| **41.47%** | **33.39%** | **15** |
| **54.59%** | **46.86%** | **20** |
| **73.33%** | **69.33%** | **30** |
| **85.97%** | **83.66%** | **45** |
| **90.52%** | **89.59%** | **60** |
| **92.89%** | **92.57%** | **75** |

Next, the breaking strength and the elongation at break of multiple samples for the comparative dryer sheet samples were conducted. The data from these tests are shown in Table 4, where the breaking strength and the elongation at break were both measured in accordance with ASTM D3822. Additionally, the fiber size of these samples was evaluated for the average diameter of the trilobal fibers as well as the dpf under a scanning electron microscope. This data is shown in Table 5.

**Table 4**

| **Break Strength/Break Elongation** | | | |
|---|---|---|---|
| **Sample** | **2055U** | | |
| **n** | **(gf)** | **%** | |
| **1** | **2.91** | **9.21** | |
| **2** | **7.23** | **37.06** | |
| **3** | **5.46** | **80.40** | |
| **4** | **3.18** | **49.21** | |
| **5** | **5.30** | **13.60** | |
| **6** | **2.57** | **3.06** | |
| **7** | **9.89** | **52.81** | |
| **8** | **4.64** | **17.61** | |
| **9** | **6.63** | **39.14** | |
| **10** | **2.72** | **3.15** | |
| **11** | **4.44** | **7.14** | |
| **12** | **2.36** | **4.77** | |
| **13** | **7.27** | **44.41** | |
| **14** | **2.24** | **21.61** | |
| **15** | **4.02** | **9.36** | |
| **16** | **7.07** | **66.81** | |
| **17** | **3.03** | **3.37** | |
| **18** | **3.12** | **4.78** | |
| **19** | **5.33** | **12.12** | |
| **20** | **6.33** | **32.81** | |
| **Avg** | **4.79** | **25.62** | |
| **Max** | **9.89** | **80.40** | |
| **Min** | **2.24** | **3.06** | |
| **SD** | **2.11** | **23.36** | |

**Table 5**

| | **OHTN21-174 Fiber Size** | | |
|---|---|---|---|
| | **Fiber Size - Trilobal** | | |
| **Sample** | **2055U** | | |
| **n** | **(µm)** | **(dpf)** | |
| **1** | **23.1** | **5.09** | |
| **2** | **25.2** | **6.06** | |
| **3** | **23.7** | **5.36** | |
| **4** | **22.2** | **4.70** | |
| **5** | **22.3** | **4.75** | |
| **6** | **25.1** | **6.01** | |
| **7** | **20.5** | **4.01** | |
| **8** | **22.6** | **4.87** | |
| **9** | **21.5** | **4.41** | |
| **10** | **22.6** | **4.87** | |
| **11** | **20.4** | **3.97** | |
| **12** | **22.6** | **4.87** | |
| **13** | **22.1** | **4.66** | |
| **14** | **23.3** | **5.18** | |
| **15** | **20.3** | **3.93** | |
| **Avg** | **22.5** | **4.85** | |
| **Max** | **25.2** | **6.06** | |
| **Min** | **20.3** | **3.93** | |
| **SD** | **1.5** | **0.64** | |

In the same manner, the breaking strength and the elongation at break of the eight initially discussed samples were conducted. The data from these tests are shown in Table 6, where the breaking strength and the elongation at break were both measured in accordance with ASTM D3822. Additionally, the fiber size of these samples was evaluated for the average diameter of the trilobal fibers as well as the dpf in accordance with under a scanning electron microscope. This data is shown in Table 7.

**Table 6**

| **Break Strength/Break Elongation** | | | |
|---|---|---|---|
| **Sample** | **2055F - rPET Sample** | | |
| **n** | **(gf)** | **%** | |
| **1** | **4.22** | **14.30** | |
| **2** | **2.24** | **3.43** | |
| **3** | **3.69** | **80.41** | |
| **4** | **2.55** | **2.79** | |
| **5** | **7.83** | **165.71** | |
| **6** | **5.99** | **74.81** | |
| **7** | **6.00** | **63.21** | |
| **8** | **7.60** | **86.81** | |
| **9** | **4.49** | **103.21** | |
| **10** | **3.20** | **8.09** | |
| **11** | **2.61** | **5.17** | |
| **12** | **5.16** | **17.55** | |
| **13** | **3.41** | **44.01** | |
| **14** | **5.92** | **28.77** | |
| **15** | **5.47** | **52.01** | |
| **16** | **8.43** | **66.41** | |
| **17** | **3.98** | **11.06** | |
| **18** | **7.22** | **46.41** | |
| **19** | **2.57** | **3.85** | |
| **20** | **2.97** | **2.42** | |
| **Avg** | **4.78** | **45.76** | |
| **Max** | **8.43** | **165.71** | |
| **Min** | **2.24** | **2.42** | |
| **SD** | **1.95** | **43.85** | |

**Table 7**

| | **OHTN21-170 Fiber Size** | | |
|---|---|---|---|
| | **Fiber Size - Trilobal** | | |
| **Sample** | **2055F - rPET Sample** | | |
| **n** | **(µm)** | **(dpf)** | |
| **1** | **25.4** | **6.16** | |
| **2** | **19.1** | **3.48** | |
| **3** | **22.2** | **4.70** | |
| **4** | **21.7** | **4.49** | |
| **5** | **24.2** | **5.59** | |
| **6** | **25.2** | **6.06** | |
| **7** | **23.1** | **5.09** | |
| **8** | **21.9** | **4.58** | |
| **9** | **19.9** | **3.78** | |
| **10** | **23.9** | **5.45** | |
| **11** | **24.5** | **5.73** | |
| **12** | **19.7** | **3.70** | |
| **13** | **24.4** | **5.68** | |
| **14** | **23.6** | **5.31** | |
| **15** | **19.5** | **3.63** | |
| **Avg** | **22.6** | **4.90** | |
| **Max** | **25.4** | **6.16** | |
| **Min** | **19.1** | **3.48** | |
| **SD** | **2.2** | **0.92** | |

These and other modifications and variations to the invention may be practiced by those of ordinary skill in the art without departing from the spirit and scope of the invention, which is more particularly set forth in the appended claims. In addition, it should be understood that aspects of the various embodiments may be interchanged in whole or in part. Furthermore, those of ordinary skill in the art will appreciate that the foregoing description is by way of example only, and it is not intended to limit the invention as further described in such appended claims. Therefore, the spirit and scope of the appended claims should not be limited to the exemplary description of the versions contained herein.

Additional non limiting example embodiments of the present disclosure are set forth below:
Embodiment 1. A nonwoven fabric, comprising:
   (i) a plurality of continuous matrix fibers comprising a first polymeric material including a first polymer component, wherein the first polymer component comprises a first recycled-polyester, such as a first recycled-polyester terephthalate (rPET), wherein the first polymeric material has a first melting point; and
   (ii) a plurality of binder fibers having an irregular cross-section randomly dispersed throughout the plurality of matrix fibers, the plurality of binder fibers comprising a second polymeric material including a second polymer component, wherein the second polymeric material has a second melting point that is less than the first melting point.
Embodiment 2. The nonwoven fabric of Embodiment 1, wherein the nonwoven fabric includes a first ratio between the plurality of continuous matrix fibers and the plurality of binder fibers, based on weight, (weight of plurality of continuous matrix fibers : weight of plurality of binder fibers) comprising from about 80:10 to about 95:5, such as at least about any of the following: 80:20, 82:18, 84:16: 85:15, 86:14, 88:12, 89:11, and 90:10, 91:9, 92:8, 93:7, 94:6, and 95:5.
Embodiment 3. The nonwoven fabric of Embodiments 1-2, wherein the plurality of continuous matrix fibers comprise monocomponent fibers.
Embodiment 4. The nonwoven fabric of Embodiments 1-3, wherein the first polymeric material further comprises a third polymer component, wherein the third polymer component comprises a third rPET or a virgin polyester, such as a virgin PET.
Embodiment 5: The nonwoven fabric of Embodiments 1-4, wherein the plurality of continuous matrix fibers (i) have a round cross-section having an aspect ratio from about 0.8 to about 1.2, such as at least about any of the following: 0.8, 0.9, and 1, and/or at most about any of the following: 1.2, 1.1, and 1, or (ii) have a non-round cross-section having an aspect ratio of at least about 1.5, such as at least about any of the following: 1.5, 1.8, 2, 2.2, 2.5, 2.8, and 3, and/or at most about any of the following: 10, 9, 8, 7, 6, 5, 4, and 3.
Embodiment 6. The nonwoven fabric of Embodiment 5, wherein the plurality of continuous matrix fibers comprise ribbon-shaped fibers, multi-lobal fibers, or a mixture thereof.
Embodiment 7. The nonwoven fabric of Embodiments 1-6, wherein the plurality of continuous matrix fibers has an average cross-section from about 12 to about 36 microns, such as at least about any of the following: 12, 15, 18, 20, 22, 24, and 25 microns, and/or at most about of the following: 36, 35, 32, 30, 28, 25 microns, an average denier per fiber (dpf) from about 3 to about 12 dpf, such as at least about any of the following: 3, 4,5, and 6 dpf, and/or at most about any of the following: 12, 10, 9, 8, 7, and 6 dpf, or both; and wherein .
Embodiment 8. A method of making a nonwoven fabric, comprising:
   (a) forming a first polymeric melt comprising a first polymeric material including a first polymer component, wherein the first polymer component comprises a first recycled-polyester, such as a first recycled-polyester terephthalate (rPET), wherein the first polymeric material has a first melting point;
   (b) producing a second polymeric melt comprising a second polymeric material including a second polymer component, wherein the second polymeric material has a second melting point that is less than the first melting point;
   (c) melt spinning the first polymeric melt through a first plurality of orifices of a spinneret and forming a plurality of continuous matrix fibers comprising the first polymeric material, and melt spinning the second polymeric melt through a second plurality of orifices of the spinneret and forming a plurality of binder fibers comprising the second polymeric material;
   (d) depositing the plurality of continuous matrix fibers and the plurality of binder fibers onto a moving belt, wherein the plurality of binder fibers are randomly dispersed within the plurality of continuous matrix fibers to provide a nonwoven web;
   (e) consolidating the nonwoven web to form the nonwoven fabric.
Embodiment 9. The method of Embodiment 8, wherein the step of consolidating the nonwoven web comprises subjecting the nonwoven web to a temperature that is greater than the second melting point and less than the first melting point.
Embodiment 10. The method of Embodiment 9, wherein the step of consolidating the nonwoven web comprises subjecting the nonwoven web to a through-air-bonding (TAB) operation, or subjecting the nonwoven web to a thermal area bonding operation.
Embodiment 11. The method of Embodiments 8-10, wherein the step of consolidating the nonwoven web comprises softening or melting the second polymer component and allowing or inducing at least a partial flowing of the second polymer component such that the plurality of binder fibers have an irregular cross-section.
Embodiment 12. The method of Embodiments 8-11, further comprising a step of annealing the nonwoven web prior to the step of consolidating the nonwoven web, wherein the step of annealing the nonwoven web comprises raising the temperature of the nonwoven web to within about 7°C below the second melting point, such as within about 6°C, 5°C, 4°C, or 3°C below the second melting point.
Embodiment 13. The method of Embodiment 12, wherein the nonwoven web is under physical constraint during the step of annealing the nonwoven web, and the method further comprises a step of allowing or actively reducing the temperature of the nonwoven web to a reduced temperature prior to releasing the nonwoven web from the physical constraint.
Embodiment 14. A dryer sheet, comprising:
   (i) a nonwoven substrate comprising a nonwoven fabric according to any one of Embodiments 1-7; and
   (ii) a fabric conditioning agent disposed on the nonwoven substrate.
Embodiment 15. A filter, comprising: a filter media comprising a nonwoven fabric according to any one of Embodiments 1-7, wherein the nonwoven fabric is housed within a frame.

## Claims

1. A nonwoven fabric, comprising:
(i) a plurality of continuous matrix fibers comprising a first polymeric material including a first polymer component, wherein the first polymer component comprises a first recycled-polyester, such as a first recycled-polyester terephthalate (rPET), wherein the first polymeric material has a first melting point; and
(ii) a plurality of binder fibers having an irregular cross-section randomly dispersed throughout the plurality of matrix fibers, the plurality of binder fibers comprising a second polymeric material including a second polymer component, wherein the second polymeric material has a second melting point that is less than the first melting point;
wherein the second polymer component comprises a second recycled-polyester, a recycled polypropylene or a recycled polyethylene.

2. The nonwoven fabric of claim 1, wherein the plurality of binder fibers comprises multi-component staple fibers or multi-component continuous fibers or a combination thereof.

3. The nonwoven fabric of claim 2, wherein
the second polymeric material defines at least a portion of an outermost surface of
(i) the multi-component staple fibers, or
(ii) the multi-component continuous fibers, or
(iii) the combination of the multi-component staple fibers and the multi-component continuous fibers.

4. The nonwoven fabric of claim 2 or 3, wherein the plurality of binder fibers comprises bicomponent staple fibers, bicomponent continuous fibers or a combination thereof.

5. The nonwoven fabric of claim 4, wherein the bicomponent staple fibers, the bicomponent continuous fibers, or the combination thereof comprises multi-lobal fibers, in which the second polymeric material defines at least a portion of the lobes of the multi-lobal fibers.

6. The nonwoven fabric of any of claims 1 to 5, wherein the first recycled-polyester has been recovered from a consumer supply chain and the second recycled-polyester has been generated during a manufacturing process of upstream polyester and plastic products.

7. The nonwoven fabric of any of the preceding claims, wherein the nonwoven fabric includes a first ratio between the plurality of continuous matrix fibers and the plurality of binder fibers, based on weight, (weight of plurality of continuous matrix fibers : weight of plurality of binder fibers) comprising from about 80:20 to about 95:5, such as at least about any of the following: 80:20, 82:18, 84:16: 85:15, 86:14, 88:12, 89:11, and 90:10, 91:9, 92:8, 93:7, 94:6, and 95:5.

8. The nonwoven fabric of any of the preceding claims, wherein
(i) the plurality of continuous matrix fibers comprises monocomponent fibers; or
(ii) the plurality of binder fibers comprises monocomponent continuous fibers, or
(iii) the plurality of binder fibers comprises monocomponent staple fibers, or
(iv) the plurality of binder fibers comprises a combination of monocomponent continuous fibers and monocomponent staple fibers.

9. A method of making a nonwoven fabric, comprising:
(a) forming a first polymeric melt comprising a first polymeric material including a first polymer component, wherein the first polymer component comprises a first recycled-polyester, such as a first recycled-polyester terephthalate (rPET), wherein the first polymeric material has a first melting point;
(b) producing a second polymeric melt comprising a second polymeric material including a second polymer component, wherein the second polymeric material has a second melting point that is less than the first melting point, and wherein the second polymer component comprises a second recycled-polyester, a recycled polypropylene or a recycled polyethylene;
(c) melt spinning the first polymeric melt through a first plurality of orifices of a spinneret and forming a plurality of continuous matrix fibers comprising the first polymeric material, and melt spinning the second polymeric melt through a second plurality of orifices of the spinneret and forming a plurality of binder fibers comprising the second polymeric material;
(d) depositing the plurality of continuous matrix fibers and the plurality of binder fibers onto a moving belt, wherein the plurality of binder fibers are randomly dispersed within the plurality of continuous matrix fibers to provide a nonwoven web;
(e) consolidating the nonwoven web to form the nonwoven fabric.

10. The method of claim 9, wherein the step of consolidating the nonwoven web comprises subjecting the nonwoven web to a temperature that is greater than the second melting point and less than the first melting point, and optionally wherein the step of consolidating the nonwoven web comprises subjecting the nonwoven web to a through-air-bonding (TAB) operation, or subjecting the nonwoven web to a thermal area bonding operation.

11. The method of claim 9 or 10, wherein the step of consolidating the nonwoven web comprises softening or melting the second polymer component and allowing or inducing at least a partial flowing of the second polymer component such that the plurality of binder fibers have an irregular cross-section.

12. The method of any of claims 9 to 11, further comprising a step of annealing the nonwoven web prior to the step of consolidating the nonwoven web, wherein the step of annealing the nonwoven web comprises raising the temperature of the nonwoven web to within about 7°C below the second melting point, such as within about 6°C, 5°C, 4°C, or 3°C below the second melting point.

13. The method of claim 12, wherein the nonwoven web is under physical constraint during the step of annealing the nonwoven web, and the method further comprises a step of allowing or actively reducing the temperature of the nonwoven web to a reduced temperature prior to releasing the nonwoven web from the physical constraint.

14. A dryer sheet, comprising:
(i) a nonwoven substrate comprising a nonwoven fabric according to any of claims 1 to 8; and
(ii) a fabric conditioning agent disposed on the nonwoven substrate.

15. A filter, comprising: a filter media comprising a nonwoven fabric according to any of claims 1 to 8, wherein the nonwoven fabric is housed within a frame.
